# EUROPÄISCHE PATENTSCHRIFT

(11) **EP 2 049 371 B1**
(45) Veröffentlichungstag und Bekanntmachung des Hinweises auf die Patenterteilung: **10.08.2011**
(21) Anmeldenummer: 07730113.3
(22) Anmeldetag: 13.06.2007
(51) Int. Cl.: B60S 1/38

(54) **SCHUTZSCHIENE FÜR WISCHBLÄTTER EINES SCHEIBENWISCHERS SOWIE VERFAHREN ZU DEREN HERSTELLUNG**
PROTECTIVE RAIL FOR WIPER BLADES OF A WINDSCREEN WIPER AND METHOD FOR MANUFACTURING IT
GLISSIERE DE PROTECTION POUR BALAIS D'ESSUIE-GLACE ET PROCEDE POUR LA FABRIQUER

(30) Priorität: 04.08.2006 DE 102006036913
(43) Veröffentlichungstag der Anmeldung: 22.04.2009
(73) Patentinhaber: Robert Bosch GmbH, 70442 Stuttgart (DE)
(72) Erfinder: DE BLOCK, Peter, 3545 Halen (BE); LUYPAERTS, Edwin, 2490 Balen (BE); HERMANS, Jan, 2221 Booischot (BE); VERBURGH, Yves, 2370 Puurs (BE)
(86) Internationale Anmeldenummer: PCT/EP2007/055806
(87) Internationale Veröffentlichungsnummer: WO 2008/015052

(56) Entgegenhaltungen:
- EP-A- 1 059 213
- DE-A1- 10 014 753
- DE-U1-202005 020 650
- FR-A1- 2 811 325
- JP-A- 2001 151 086

## Beschreibung

Die vorliegende Erfindung bezieht sich auf eine Schutzschiene für Wischblätter eines Scheibenwischers sowie auf ein Verfahren zu deren Herstellung und deren Verwendung nach dem Oberbegriff der unabhängigen Ansprüche.

### Stand der Technik

Insbesondere bei der Auslieferung von Neufahrzeugen besteht der Bedarf, die Wischleisten der montierten Wischblätter vor Verschmutzung bzw. Abnutzung zu schützen. Dies geschieht u. a. durch Befestigung einer Schutzschiene an der Wischleiste, die insbesondere die Wischlippe des Wischerblatts vor mechanischen Beschädigungen schützt.

So ist aus der unveröffentlichten DE 20 2005 020650 ein Wischblatt mit einer Schutzschiene bekannt, deren Grundkörper ein v-förmiges Querschnittprofil aufweist und eine Wischlippe einer Wischleiste umfasst, indem nach innen weisende Stege in Längsnuten der Wischleiste eingreifen. An der Kante der Schutzschiene, an der die Seitenwände des Grundkörpers v-förmig zusammenlaufen, ist außen eine Wischlippe befestigt. Diese verleiht der Schutzschiene die Möglichkeit, die Fahrzeugscheibe zu trocknen und zu reinigen. Allerdings ist die Schutzschiene aufgrund ihres großen Biegewiderstandsmoments nur in eingeschränktem Umfang in der Lage, ein ausreichend gutes Wischbild zu erzielen. Dieser Effekt wird verstärkt durch die Tatsache, dass die Wischlippe der Schutzschiene im Gegensatz zur Wischlippe eines Scheibenwischerwischblattes an den Umkehrpunkten der Wischbewegung augrund des fehlenden Kippstegs nur geringe Kippbewegungen ausführen kann.

Aus FR-A-2 811 325 ist ein Wischblatt mit einem Festschmierstoff offenbart, der als Schicht auf der Oberfläche der Wischlippe angebracht ist.

Dabei erreicht der Reibuhgskoeffizient der an der Schutzleiste befestigten Schutzschiene eine Größenordnung, die dazu führen kann, dass im Trockenlauf die Schutzschiene aus dem zu schützenden Wischerblatt ausgedreht wird oder dass der Wischmotor das erhöhte Drehmoment nicht mehr aufbringen kann und es zu einem Festfahren des Wischersystems kommt.

### Aufgabe und Vorteile der Erfindung

Aufgabe der vorliegenden Erfindung ist es daher, eine Schutzschiene für Wischblätter eines Scheibenwischers bereitzustellen, die ein ausreichend gutes Wischbild beim Wischen von Glasoberflächen zeigt.

Diese Aufgabe wird durch eine Schutzschiene bzw. durch ein Verfahren zur Herstellung desselben mit den kennzeichnenden Merkmalen der unabhängigen Ansprüche in vorteilhafter Weise gelöst.

Dies beruht insbesondere darauf, dass die Schutzschiene einen Grundkörper zum Schutz einer Wischgummilippe des Wischblatts aufweist, wobei an dem Grundkörper eine Wischlippe ausgebildet ist, die zumindest in einem Bereich ihrer Oberfläche mit einem Gleitmittel versehen ist. Auf diese Weise wird die Reibung zwischen der Wischlippe der Schutzschiene und der zu wischenden Oberfläche in vorteilhafter Weise verringert und die Wischqualität der Schutzschiene deutlich verbessert.

Weitere vorteilhafte Ausführungsformen der vorliegenden Schutzschiene ergeben sich aus den Unteransprüchen.

Die Wischlippe der Schutzschiene ist aus einem Elastomer, wie beispielsweise einem thermoplastischen Material oder einem Gummi gebildet, und kann oberflächlich zumindest bereichsweise mit einem Gleitlack als Gleitmittel versehen sein, der einen Festschmierstoff und einen organischen Binder enthält. Die Wischlippe enthält Gleitmittel in ihre Elastomermatrix eingelagerte Partikel eines Festschmierstoffes. In beiden Fällen wird durch die Verwendung eines Gleitmittels erreicht, dass die Reibung zwischen der Wischlippe der Schutzschiene und der zu wischenden Oberfläche verringert wird. Die Ausbildung der Wischlippe aus einem elastomeren Material erhöht darüber hinaus die Flexibilität der Wischlippe und führt zu einer weiteren Verbesserung des Wischbildes.

Wird das Gleitmittel der Elastomermatrix der Wischlippe beigemischt, so kann es gegebenenfalls zu einer reduzierten Anbindung der Wischlippe an den Grundkörper kommen. Dies kann vorteilhafterweise dadurch kompensiert werden, dass die Wischlippe am Grundkörper mechanisch zusätzlich fixiert ist. Dies erfolgt insbesondere durch Ausbildung von Flanschen an der dem Grundkörper zugewandten Seite der Wischlippe, die in entsprechende Nuten des Grundkörpers eingreifen.

Die Herstellung der Schutzschiene erfolgt vorteilhafterweise, indem der Grundkörper und die Wischlippe der Schutzschiene zusammen durch Zweikomponenten-Spritzgießen oder durch Coextrusion hergestellt und miteinander verbunden werden, da auf diese Weise die Herstellung der Schutzschiene kostengünstig durchgeführt werden kann und dennoch eine feste Anbindung der Wischlippe an den Grundkörper des Schutzschiene gewährleistet ist.

Darüber hinaus kann die an der Schutzschiene vorgesehene Wischlippe vor dem Auftrag eines das Gleitmittel enthaltenden Gleitlacks eine Vorbehandlung der Elastomeroberfläche der Wischlippe unterzogen werden. Dies kann beispielsweise durch Beflammen oder durch Einwirkung einer Plasma-Atmosphäre oder von Coronaentladungen geschehen. Der nachfolgende Auftrag des Gleitlacks führt zu einer haftfesten Verbindung der Gleitlackschicht mit der Elastomermatrix das Wischgummis.

Die Schutzschiene eignet sich in vorteilhafter Weise zum Schutz von Wischblättern von Fahrzeugen während des Transportes oder während einer Lagerung derselben.

### Ausführungsbeispiele

Die Erfindung wird anhand der Zeichnungen und der nachfolgenden, darauf Bezug nehmenden Beschreibung näher erläutert. Es zeigt
- Figur 1: einen perspektivischen Schnitt einer Schutzschiene gemäß einem ersten Ausführungsbeispiel,
- Figur 2: einen perspektivischen Schnitt einer Schutzschiene gemäß einem zweiten Ausführungsbeispiel und
- Figur 3: eine Schnittdarstellung einer Variante der in Figur 2 dargestellten Schutzschiene.

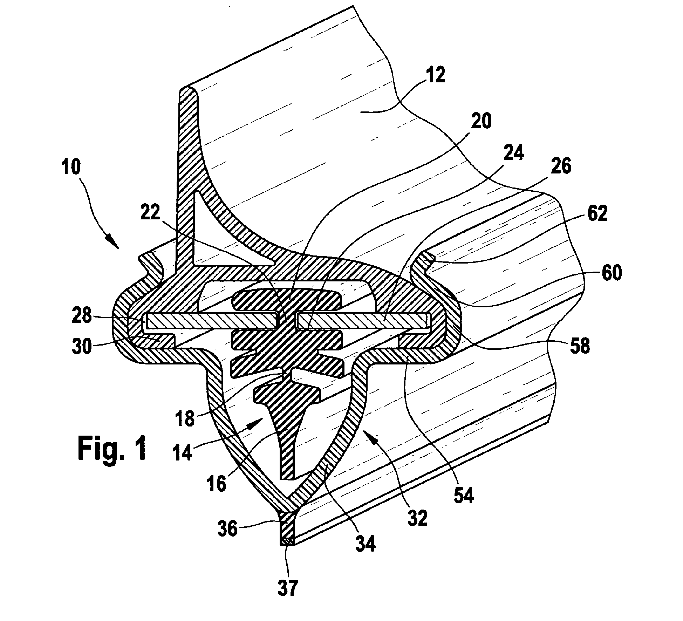

In Figur 1 ist der prinzipielle Aufbau einer ersten Ausführungsform der vorliegenden Erfindung dargestellt. Ein Wischblatt 10 besitzt eine Wischleiste 14 mit einer Wischgummilippe 16, die über einen Kippsteg 18 mit einer Kopfleiste 20 verbunden ist. Die Kopfleiste 20 weist zwei einander gegenüberliegende Längsnuten 24 auf, die einen Steg 22 bilden und in die jeweils ein flaches, balkenförmiges und elastisches Tragelement 26 eingelegt ist. Das Tragelement 26 ist in Längsrichtung so vorgebogen, dass das Wischblatt 10 unter der Anpresskraft eines nicht dargestellten Wischarms an einer Fahrzeugscheibe mit einer geeigneten Druckverteilung anliegt.

Das Wischblatt 10 besitzt ferner einen Spoiler 12, der zu den Tragelementen 26 hin zwei nach innen gerichtete Längsnuten 28 aufweist, in die die Tragelemente 26 eingreifen und somit den Spoiler 12 am Wischblatt 10 halten. In Richtung zur Wischgummilippe 16 wird die Längsnut 28 des Spoilers 12 von einer nach innen weisenden Rippe 30 begrenzt.

Eine Schutzschiene 32 umfasst mit ihrem Grundkörper 34, der einen v-förmigen Querschnitt aufweist, die Wischlippe 16 und den angrenzenden Teil der Kopfleiste 20, sodass die Wischleiste 14 zum einen von der Schutzschiene 32 und zum anderen von dem Spoiler 12 gegenüber Einflüssen aus der Umgebung geschützt ist. Die Schutzschiene 32 wird vor der Konservierung eines neuen Fahrzeugs montiert und kurz vor der Auslieferung des Fahrzeugs an einen Kunden demontiert.

Die Schutzschiene 32 weist an den Rändern ihres v-förmig divergierenden Grundkörpers 34 nach außen divergierende Flansche 54 auf, an die sich Halteprofile 58 anschließen, die mit Schenkeln 60 die seitlich vorstehenden Teile des Spoilers 12 im Bereich der Tragelemente 26 umfassen. Um die Schutzschiene 32 zur leichteren Montage besser an den Spoiler 12 anklippsen zu können, besitzt der Schenkel 60 an seiner freien Längskante eine Leiste 62, die von der Außenkontur des Spoilers 12 abgewinkelt ist. Die Leiste 62 erleichtert sowohl die Montage als auch die Demontage der Schutzschiene 56, die im montierten Zustand zwischen dem Schenkel 60 und dem Flansch 54 am Spoiler 12 gehalten wird.

Zur Ausübung der Reinigungs- und Trockenfunktion besitzt die Schutzschiene 32 eine Wischlippe 36. So kann der Scheibenwischer vor der Auslieferung des Fahrzeugs betätigt werden, ohne dass die Wischlippe 16 oder die Fahrzeugscheibe beschädigt werden. Dabei ist die Wischlippe 36 bspw. aus einem thermoplastischen Elastomer oder aus einem Gummimaterial ausgeführt. Während der Herstellung des Schutzschiene 32 werden der Grundkörper 34 und die Wischlippe 36 bspw. durch Coextrusion oder Zweikomponentenspritzgieβen gemeinsam erzeugt und ausgehärtet.

Die Wischlippe 36 der Schutzschiene 32 zeigt jedoch ein anderes Wischverhalten als die Wischgummilippe 16 des Wischblatts 10. Grund hierfür ist, dass die Wischlippe 36 direkt und vollflächig auf dem Grundkörper 34 der Schutzschiene 32 angeordnet ist, während hingegen die Wischgummilippe 16 über den Kippsteg 18 mit dem Kopfteil 20 flexibel verbunden ist. Dies bedingt, dass die Wischgummilippe 16 während einer Wischbewegung geneigt über eine zu wischende Oberfläche bewegt wird und somit lediglich mit einer Außenkante der Wischgummilippe die Oberfläche berührt; im Gegensatz dazu liegt die Wischlippe 36 während einer Wischbewegung über eine zu wischende Oberfläche mehr oder minder vollflächig mit ihrer dem Grundkörper 34 abgewandten Wischfläche auf der zu wischenden Oberfläche auf. Es kommt somit zu einer starken Haftung zwischen der Wischlippe 36 und der zu wischenden Oberfläche.

Um den auftretenden starken Reibungskoeffizienten soweit zu verringern, dass ein akzeptables Wischbild der Wischgummilippe 36 zu erwarten ist, wird diese zumindest in den Bereichen, die mit einer zu wischenden Oberfläche in Berührung kommen, mit einem Gleitmittel versehen. Dies kann beispielsweise durch Auftragen eines Gleitlacks auf die Außenkontur der Wischlippe 36 erfolgen.

Dabei ist die Beschichtung 37 lediglich auf einer der zu wischenden Oberfläche zugewandten Seite der Wischgummilippe 36 vorgesehen. Alternativ ist es jedoch auch möglich, die im wesentlichen vertikal ausgerichteten Wangen des Wischgummis 36 mit einer Beschichtung 37 aus einem Gleitlack teilweise oder vollflächig zu versehen.

Dabei umfasst der Gleitlack mindestens einen Festschmierstoff sowie mindestens einen organischen Binder. Als Festschmierstoff kommen beispielsweise Partikel aus Polytetrafluorethylen (PTFE) sowie aus PE oder einem Silicon in Betracht. Der Gleitlack kann als Lack auf Wasserbasis oder auf Basis organischer Lösungsmittel ausgeführt sein. Zum Einsatz können dabei sowohl einkomponentige als auch zweikomponentige Lacksysteme kommen. Der Gleitlack wird im flüssigen Zustand auf das bereits fertig gestellte Elastomerprofil der Wischgummilippe 36 beispielsweise durch Spritzen, Eintauchen, Bürsten, Rollen oder Pinseln aufgebracht und durch Trocknen ausgehärtet. Um die Haftfestigkeit des Gleitlacks auf der Wischlippe 36 zu verbessern, kann die Wischlippe 36 vor dem Aufbringen des Gleitlacks aktiviert werden. Dies kann bspw. durch Beflammen oder durch eine Behandlung mit einem geeigneten Plasma oder eine Corona-Entladung geschehen.

Eine Alternative besteht darin, der Materialmatrix der Wischlippe 36 ein Gleitmittel in Form eines Trockenschmierstoffes zumindest in dem Bereich der Wischlippe 36, der einer zu wischenden Oberfläche zugewandt ist, hinzuzufügen sodass die dabei im oberflächennahen Bereich der Wischlippe 36 positionierten Trockenschmierstoffpartikel ebenfalls zu einer Herabsetzung des Reibungskoeffizienten der Wischlippe 36 führt. Als Trockenschmierstoff eignen sich auch hier Partikel aus Polytetrafluorethylen (PTFE) sowie aus PE oder einem Silicon.

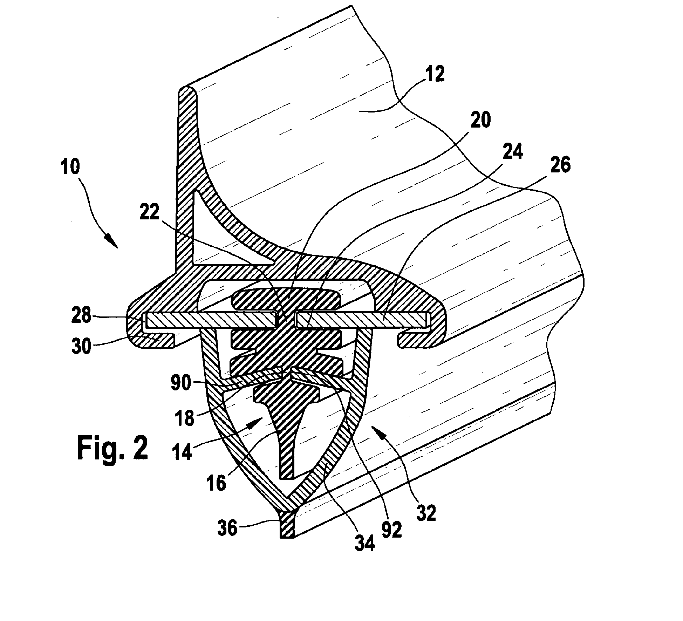

In Figur 2 ist eine Schutzschiene gemäß einer zweiten Ausführungsform der vorliegende Erfindung dargestellt. Dabei bezeichnen gleich Bezugszeichen gleiche Bauteilkomponenten wie in Figur 1.

Die Schutzschiene 32 gemäß der in Figur 2 dargestellten Ausführungsform ist besonders einfach ausgeführt und preiswert. Sie besitzt an ihrem Grundkörper 34 nach innen gerichtete Rippen 90, die in Längsnuten 92 seitlich des Kippstegs 18 eingreifen. Die über die Rippen 90 zum Spoiler 12 hin überstehenden Teile der Schutzschiene 32 stützen sich an den Tragelementen 26 ab, sodass die Wischleiste 14 rundum gegenüber der Umgebung geschützt ist.

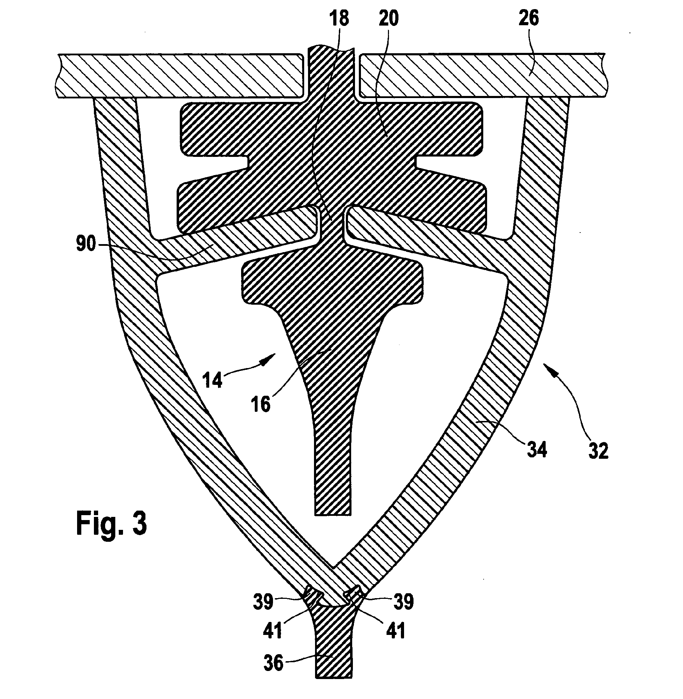

Insbesondere dann, wenn die Materialmatrix der Wischlippe 36 einen Trockenschmierstoff aufweist, kann es von Vorteil sein, wenn die Wischlippe 36 mit zusätzlichen mechanischen Verankerungen am Grundkörper 34 der Schutzschiene 36 verankert wird. Dazu kann die Wischlippe 36, wie in Figur 3 dargestellt, Flansche 39 aufweisen, die in entsprechende Nuten 41 des Grundkörpers eingreifen. Eine derartige mechanische Fixierung der Wischlippe 36 am Grundkörper 34 kann auch bei der in Figur 1 dargestellten Ausführungsform der Schutzschiene 32 vorgesehen sein.

## Patentansprüche

1. Schutzschiene für Wischblätter eines Scheibenwischers mit einem Grundkörper (34) zum Schutz einer Wischgummilippe (16) des Wischblatts (10), wobei der Grundkörper (34) einen im Wesentlichen v-förmigen Querschnitt aufweist, mit Befestigungselementen (58, 90) zur lösbaren Befestigung der Schutzschiene (32) an dem zu schützenden Wischblatt (10) und mit einer am Grundkörper (34) ausgebildeten Wischlippe (36), **dadurch gekennzeichnet, dass** die Wischlippe (36) zumindest in einem Bereich ihrer Oberfläche mit einem Gleitmittel versehen ist, wobei die Wischlippe (36) als Gleitmittel in ihre Elastomermatrix eingelagerte Partikel eines Festschmierstoffes enthält.

2. Schutzschiene nach Anspruch 1, **dadurch gekennzeichnet, dass** die Wischlippe (36) aus einem thermoplastischen Material oder aus einem Gummi gebildet ist.

3. Schutzschiene nach Anspruch 1 oder 2, **dadurch gekennzeichnet, dass** die Wischlippe (36) oberflächlich zumindest bereichsweise mit einem Gleitlack als Gleitmittel versehen ist, der einen Festschmierstoff und einen organischen Binder enthält.

4. Schutzschiene nach Anspruch 3 oder 1, **dadurch gekennzeichnet, dass** der Festschmierstoff PTFE oder ein Silikon ist.

5. Schutzschiene nach einem der vorhergehenden Ansprüche, **dadurch gekennzeichnet, dass** die Wischlippe (36) lediglich in einem eine zuwischende Oberfläche berührenden Bereich mit dem Gleitmittel versehen ist.

6. Schutzschiene nach einem der vorhergehenden Ansprüche, **dadurch gekennzeichnet, dass** die Wischlippe (36) mindestens einen Flansch (39) aufweist, der zur mechanischen Verankerung der Wischlippe (36) am Grundkörper (34) in Nuten (41) des Grundkörpers (34) eingreift.

7. Verfahren zur Herstellung einer Schutzschiene nach einem der vorhergehenden Ansprüche, **dadurch gekennzeichnet, dass** eine Wischlippe (36) der Schutzschiene (32) mit einem Gleitmittel versehen wird, wobei die Wischlippe (36) als Gleitmittel in ihre Elastomermatrix eingelagerte Partikel eines Festschmierstoffes enthält.

8. Verfahren nach Anspruch 7, **dadurch gekennzeichnet, dass** der Grundkörper (34) der Schutzschiene (32) zusammen mit einer Wischlippe (36) durch Zweikomponenten-Spritzgießen oder durch Coextrusion hergestellt und miteinander verbunden werden.

9. Verfahren nach Anspruch 7 oder 8, **dadurch gekennzeichnet, dass** die Oberfläche der Wischlippe (36) einer Oberflächenbehandlung in Form von Beflammen oder Einwirkung einer Plasma-Atmosphäre oder von Coronaentladungen unterzogen wird und nachfolgend der Auftrag eines Gleitlacks als Gleitmittel erfolgt.

10. Verfahren nach Anspruch 7 oder 8, **dadurch gekennzeichnet, dass** dem Material der Wischlippe (36) ein Gleitmittel in Form eines Trockenschmierstoffs beigegeben wird.

11. Verwendung einer Schutzschiene nach einem der Ansprüche 1 bis 6 zum Schutz von Wischblättern von Fahrzeugen während des Transportes oder während einer Lagerung derselben.

## Claims

1. Protective rail for wiper blades of a windscreen wiper, comprising a main element (34) for protecting a rubber wiping lip (16) of the wiper blade (10), the main element (34) having a substantially v-shaped cross section, comprising fastening elements (58, 90) for releasably fastening the protective rail (32) to the wiper blade (10) to be protected and comprising a wiping lip (36) formed on the main element (34), **characterized in that** the wiping lip (36) is provided with a lubricant, at least in a region of its surface, the wiping lip (36) containing as the lubricant particles of a solid lubricant that are incorporated in its elastomer matrix.

2. Protective rail according to Claim 1, **characterized in that** the wiping lip (36) is formed from a thermoplastic material or from a rubber.

3. Protective rail according to Claim 1 or 2, **characterized in that** the wiping lip (36) is provided, at least in certain regions, on its surface with a lubricating varnish as a lubricant, containing a solid lubricant and an organic binder.

4. Protective rail according to Claim 3 or 1, **characterized in that** the solid lubricant is PTFE or a silicone.

5. Protective rail according to one of the preceding claims, **characterized in that** the wiping lip (36) is provided with the lubricant only in a region that is in contact with a surface to be wiped.

6. Protective rail according to one of the preceding claims, **characterized in that** the wiping lip (36) has at least one flange (39), which, for mechanically anchoring the wiping lip (36) on the main element (34), engages in grooves (41) in the main element (34).

7. Method for manufacturing a protective rail according to one of the preceding claims, **characterized in that** a wiping lip (36) of the protective rail (32) is provided with a lubricant, the wiping lip (36) containing as the lubricant particles of a solid lubricant that are incorporated in its elastomer matrix.

8. Method according to Claim 7, **characterized in that** the main element (34) of the protective rail (32) is produced together with a wiping lip (36), and connected thereto, by two-component injection moulding or by co-extrusion.

9. Method according to Claim 7 or 8, **characterized in that** the surface of the wiping lip (36) is subjected to a surface treatment in the form of application of a flame or exposure to a plasma atmosphere or corona discharges, followed by the application of a lubricating varnish as a lubricant.

10. Method according to Claim 7 or 8, **characterized in that** a lubricant in the form of a dry lubricant is added to the material of the wiping lip (36).

11. Use of a protective rail according to one of Claims 1 to 6 for protecting wiper blades of vehicles during transport or during storage of the same.

## Revendications

1. Rail de protection pour balais d'essuie-glace d'un essuie-glace, comprenant un corps de base (34) pour protéger une lèvre de balai d'essuie-glace en caoutchouc (16) du balai d'essuie-glace (10), le corps de base (34) présentant une section transversale essentiellement en forme de V, avec des éléments de fixation (58, 90) pour la fixation amovible du rail de protection (32) sur le balai d'essuie-glace (10) à protéger, et comprenant une lèvre de balai d'essuie-glace (36) réalisée sur le corps de base (34), **caractérisé en ce que** la lèvre de balai d'essuie-glace (36) est pourvue, au moins dans la région de sa surface, d'un agent lubrifiant, la lèvre de balai d'essuie-glace (36) contenant en tant qu'agent lubrifiant des particules d'un lubrifiant solide incorporées dans sa matrice élastomère.

2. Rail de protection selon la revendication 1, **caractérisé en ce que** la lèvre de balai d'essuie-glace (36) est formée d'un matériau thermoplastique ou d'un caoutchouc.

3. Rail de protection selon la revendication 1, **caractérisé en ce que** la lèvre de balai d'essuie-glace (36) est pourvue du côté de sa surface, au moins en partie, d'un vernis lubrifiant en tant qu'agent lubrifiant, qui contient un lubrifiant et un liant organique.

4. Rail de protection selon la revendication 3 ou 1, **caractérisé en ce que** le lubrifiant solide est du PTFE ou de la silicone.

5. Rail de protection selon l'une quelconque des revendications précédentes, **caractérisé en ce que** la lèvre de balai d'essuie-glace (36) est pourvue de l'agent lubrifiant seulement dans une région en contact avec une surface d'essuyage.

6. Rail de protection selon l'une quelconque des revendications précédentes, **caractérisé en ce que** la lèvre de balai d'essuie-glace (36) présente au moins une bride (39) qui vient en prise dans des rainures (41) du corps de base (34) pour l'ancrage de la lèvre de balai d'essuie-glace (36) sur le corps de base (34).

7. Procédé de fabrication d'un rail de protection selon l'une quelconque des revendications précédentes, **caractérisé en ce qu'**une lèvre de balai d'essuie-glace (36) du rail de protection (32) est pourvue d'un agent lubrifiant, la lèvre de balai d'essuie-glace (36) contenant, en tant qu'agent lubrifiant, des particules d'un lubrifiant solide incorporées dans sa matrice élastomère.

8. Procédé selon la revendication 7, **caractérisé en ce que** le corps de base (34) du rail de protection (32) conjointement avec une lèvre de balai d'essuie-glace (36) sont fabriqués par moulage par injection à deux composants ou par co-extrusion et sont assemblés l'un à l'autre.

9. Procédé selon la revendication 7 ou 8, **caractérisé en ce que** la surface de la lèvre de balai d'essuie-glace (36) est soumise à un traitement de surface sous forme d'un flammage ou à l'action d'une atmosphère de plasma ou d'une décharge corona, et ensuite a lieu l'enduction d'un vernis lubrifiant en tant qu'agent lubrifiant.

10. Procédé selon la revendication 7 ou 8, **caractérisé en ce que** l'on ajoute au matériau de la lèvre de balai d'essuie-glace (36) un agent lubrifiant sous forme d'un lubrifiant sec.

11. Utilisation d'un rail de protection selon l'une quelconque des revendications 1 à 6, pour la protection de balais d'essuie-glace de véhicules pendant le transport ou pendant un stockage de ceux-ci.
